# EUROPÄISCHE PATENTSCHRIFT

(11) **EP 0 898 843 B1**
(45) Veröffentlichungstag und Bekanntmachung des Hinweises auf die Patenterteilung: **06.12.2000**
(21) Anmeldenummer: 97923861.5
(22) Anmeldetag: 09.05.1997
(51) Int. Cl.: H04Q 3/66

(54) **VERFAHREN ZUR RICHTUNGSABHÄNGIGEN BELEGUNGSVERTEILUNG BEI WECHSELSEITIG BETRIEBENEN LEITUNGSBÜNDELN**
PROCESS FOR DISTRIBUTING ENGAGEMENT REQUESTS DEPENDING ON DIRECTION IN TWO-WAY TRUNK GROUPS
PROCEDE POUR LA REPARTITION DIRECTIONNELLE DES DEMANDES D'OCCUPATION DANS DES LIGNES GROUPEES BIDIRECTIONNELLES ALTERNEES

(30) Priorität: 17.05.1996 DE 19619996
(43) Veröffentlichungstag der Anmeldung: 03.03.1999
(73) Patentinhaber: Deutsche Telekom AG, 64307 Darmstadt (DE)
(72) Erfinder: HAPPEL, Werner, D-64625 Bensheim (DE)
(86) Internationale Anmeldenummer: EP9702385
(87) Internationale Veröffentlichungsnummer: WO9744963

(56) Entgegenhaltungen:
- EP-A- 0 005 687
- PROCEEDINGS OF THE TWELFTH INTERNATIONAL TELETRAFFIC CONGRESS - ITC12, Bd. 1, 1. - 8.Juni 1988, TORINO (IT), Seiten 35-41, XP000279758 A. TODA: "Traffic design of telecommunication network with both-way circuit operation"
- ELECTRONICS AND COMMUNICATIONS IN JAPAN - PART 1 - COMMUNICATIONS, Bd. 69, Nr. 10, Oktober 1986, SILVER SPRING (US), Seiten 93-101, XP002038822 A. TODA ET AL: "Selection Method for both-awy circuit groups between Multiunit Offices"
- ELECTRONICS & COMMUNICATIONS IN JAPAN - PART 1, Bd. 68, Nr. 9, September 1985, NEWYORK (US), Seiten 88-97, XP002038829 A. TODA: "Traffic Control Strategies for Both-Way circuit group"

## Beschreibung

Die Erfindung betrifft ein Verfahren zur richtungsabhängigen Belegungsverteilung bei wechselseitig betriebenen Leitungsbündeln nach dem Oberbegriff des Patentanspruchs 1.

Die zwischen rechnergesteuerten Vermittlungseinrichtungen geschalteten Leitungsbündel in Sprach- und Datennetzen werden im allgemeinen wechselseitig betrieben. Bei dieser Betriebsweise können beide Vermittlungseinrichtungen unabhängig voneinander auf freie Leitungen des Bündels zugreifen und diese belegen. Dadurch wird die volle Leistungsfähigkeit des Leitungsbündels genutzt. Allerdings besteht bei dieser Betriebsart die Gefahr, daß bei vorübergehender Dominanz einer Verkehrsrichtung der Verkehrsfluß der anderen Richtung beeinträchtigt oder sogar verdrängt wird. Die Verkehrsgüte dieser Richtung geht hierbei stark zurück.

Bekannt sind bis jetzt zwei Verkehrsmanagement-Verfahren, die einer Verdrängung vorbeugen. Dies wird einmal durch das Einbringen der Verkehrsmanagement-Funktion "Trunk Reservation" und zum anderen durch Dreiteilen der betrachteten Verkehrsbeziehung erzielt.

Bei der "Trunk Reservation" wird eine Verkehrsrichtung bevorzugt, indem jeweils die letzte freie Leitung für diese Richtung freigehalten wird. Das bedeutet, daß nur die bevorzugte Richtung auf die letzte freie Leitung zugreifen kann. Damit würde ein Verbindungswunsch der nicht geschützten Richtung bei der gleichen Ausgangssituation abgewiesen und ginge somit verlustig.

Hieraus ergibt sich der Nachteil, daß nur eine Richtung geschützt ist und der Verkehr der anderen Richtung verdrängt werden kann, wenn die geschützte Richtung ein entsprechend hohes Angebot aufweist.

Das Dreiteilen der betrachteten Verkehrsbeziehung ist derzeit die einzige Möglichkeit, die bekannt ist, um beide Richtungen vor einem Verdrängen durch die jeweils andere Richtung gleichberechtigt zu schützen. Die Aufteilung der Leitungen eines Bündels in drei Teilbündel wird wie folgt vorgenommen:
- in ein gerichtet betriebenes Teilbündel für den Grundverkehr der gehenden Richtung,
- in ein gerichtet betriebenes Teilbündel für den Grundverkehr der kommenden Richtung und
- in ein wechselseitig betriebenes Teilbündel, das von den Spitzenverkehren beider Richtungen benutzt werden kann.

Bei der Dominanz einer Verkehrsrichtung ist in diesem Fall das Verdrängen des Verkehrs aus der Gegenrichtung nur noch im wechselseitigen Teilbündel möglich, nicht aber im gerichteten Teilbündel der Gegenrichtung.

Der Nachteil dieser Betriebsart ist, daß die volle Leistungsfähigkeit eines wechselseitigen Leitungsbündels nicht erreicht werden kann. Damit werden mehr Leitungen für die Abwicklung eines bestimmten Verkehrs benötigt als eigentlich erforderlich sind.

Die bekannten Verkehrsmanagement-Verfahren sind in der CCITT-Empfehlung E.412 "Network Management Controls" (10/92) von INTERN. TELECOMMUNICATION UNION zusammengefaßt und prinzipiell beschrieben.

Der vorliegenden Erfindung liegt das Problem zugrunde, die volle Leistungsfähigkeit eines wechselseitig betriebenen Bündels sicherzustellen und gleichzeitig das gegenseitige Verdrängen für beide Richtungen des Verkehrs auszuschließen.

Der Erfindung liegt deshalb die Aufgabe zugrunde, ein Verfahren zur richtungsabhängigen Belegungsverteilung bei wechselseitig betriebenen Leitungsbündeln, die zwischen rechnergesteuerten Vermittlungseinrichtungen angeordnet sind, zu schaffen, das die volle Leistungsfähigkeit des wechselseitg betriebenen Leitungsbündels sicherstellt, eine gegenseitige Verdrängung des Verkehrs für beide Richtungen ausschließt und das Teilungsverhältnis auf eine Leitung genau an die tatsächlichen Verhältnisse anpaßbar macht.

Die erfindungsgemäße Lösung der Aufgabe ist insbesondere im Kennzeichen des Patentanspruchs 1 charakterisiert.

Weitere Merkmale der Erfindung bzw. Ausgestaltungen ergeben sich aus den Kennzeichen der dem Patentanspruch 1 folgenden Patentansprüche 2 bis 5.

Die dadurch erzielbaren Vorteile bestehen darin, daß mit dem neuen Verkehrsmanagement-Verfahren sowohl die volle Leistungsfähigkeit der wechselseitigen Betriebsweise ausgenutzt wird als auch für jeden denkbaren Betriebszustand eine Verdrängung zugunsten einer Verkehrsrichtung wirkungsvoll verhindert wird. Darüberhinaus kann das Verhältnis zwischen gehendem und kommendem Verkehr frei schwingen, solange nicht alle Leitungen belegt sind. Das Teilungsverhältnis ist auf eine Leitung genau an die tatsächlichen Verhältnisse anpaßbar. Bei einer dauerhaften Veränderung in der Aufteilung zwischen gehendem und kommendem Verkehr können die neuen Verhältnisse leichter durch das Verändern des Soll-Teilungsverhältnisses nachgebildet werden als durch eine neue Aufteilung des Leitungsbündels in drei Teilbündel.

Das erfindungsgemäße Verfahren bringt demnach Einsparungen an Leitungen und führt - selbst bei ungewöhnlichen Verkehrsverhältnissen - zu einer ausgewogenen Verkehrsverteilung zwischen dem gehenden und dem kommenden Verkehr eines Leitungsbündels und damit zu einer Verbesserung der Verkehrsgüte.

Die Erfindung wird nun anhand eines in der Zeichnung dargestellten Ausführungsbeispiels näher beschrieben.

In der Zeichnung bedeuten:
- Fig. 1: ein Flußdiagramm für eine richtungsabhängige Belegungsverteilung bei wechselseitig betriebenen Leitungsbündeln und
- Fig. 2: eine beispielhafte richtungsabhängige Belegungsverteilung bei wechselseitig betriebenen Leitungsbündeln.

In der Beschreibung, in den Figuren und in den Patentansprüchen sowie in der Zusammenfassung werden folgende Bezugszeichen und entsprechende Begriffe verwendet:

| | |
|---|---|
| VE A bzw. B | Vermittlungseinrichtung A bzw. B |
| TV | Teilungsverhältnis |
| Soll-TV | Soll-Teilungsverhältnis |
| Ist-TV | Ist-Teilungsverhältnis |

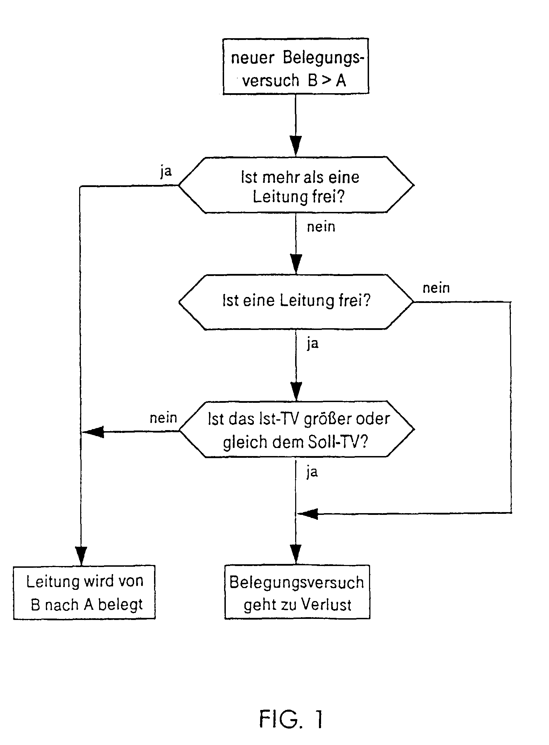

Die Funktionsweise des neuen Verfahrens für die richtungsabhängige Belegungsverteilung bei wechselseitig betriebenen Leitungsbündeln wird im nachfolgenden anhand des in der Fig. 1 dargestellten Flußdiagramms beschrieben. Das Ist-Teilungsverhältnis Ist-TV bezieht sich auf den aktuellen Belegungszustand, ohne die anstehende, neue Belegung zu berücksichtigen.
- In die Vermittlungseinrichtungen VE A und VE B werden für das sie verbindende, wechselseitige Leitungsbündel jeweils ein Verhältnis für die Aufteilung des Verkehrs in die gehende und kommende Richtung eingegeben. Das Teilungsverhältnis TV richtet sich nach den Verkehrsanteilen, die im Normalfall in der gehenden und in der kommenden Richtung fließen.
- Die Belegungen und die Belegungsrichtung jeder Leitung werden ständig von jeder der beiden Vermittlungseinrichtungen VE A und VE B beobachtet.
- Solange mehr als eine Leitung des Leitungsbündels frei ist, kann das Verhältnis zwischen gehendem und kommendem Vekehr frei schwingen, das heißt beide Vermittlungseinrichtungen VE A und VE B können auf die Leitungen so zugreifen, wie es die eintreffenden Belegungen erfordern.
- Ist nur eine Leitung frei, wird das Teilungsverhältnis betrachtet.
- Ist das augenblickliche Verhältnis zwischen den gehend und den kommend belegten Leitungen von der Vermittlungseinrichtung VE B aus betrachet kleiner als das vorgesehene Soll-Teilungsverhältnis Soll-TV, wird die an der Vermittlungseinrichtung VE B anstehende, neue Belegung durchgeschaltet. Dabei wird das Ist-Teilungsverhältnis Ist-TV in Richtung zum Soll-Teilungsverhältnis Soll-TV korrigiert.

Eine zum gleichen Zeitpunkt an der Vermittlungseinrichtung VE A anstehende Belegung in Rückrichtung hätte für die selbe Ausgangslage ein für die Vermittlungseinrichtung VE A zu großes Ist-Teilungsverhältnis Ist-TV vorgefunden und die Belegung wäre dadurch verlustig gegangen (wäre diese Belegung durchgeschaltet worden, dann hätte sich das Ist-Teilungsverhältnis Ist-TV weiter vom Soll-Teilungsverhältnis Soll-TV entfernt und damit wäre eine Verdrängung der Gegenrichtung erfolgt).

Eine besondere Synchronisation zwischen den beiden Vermittlungseinrichtungen VE A und VE B ist nicht erforderlich, sie erfolgt automatisch über das Beobachten der belegten Leitungen von beiden Vermittlungseinrichtungen VE A und VE B aus.

Durch das Beobachten der letzten freien Leitung und die ausschließliche Belegung dieser Leitung mit einer Verbindung in die richtige Richtung wird - selbst wenn das Bündel gerade unterlastet war und das Ist-Teilungsverhältnis Ist-TV weit vom Soll-Teilungsverhältnis Soll-TV entfernt ist - das neue Ist-Teilungsverhältnis Ist-TV mit jeder neuen, frei werdenden und damit neuen, belegbaren Leitung wirkungsvoll in Richtung zum Soll-Teilungsverhältnis Soll-TV verändert.

Bei großen oder sehr großen Leitungsbündeln mit mehreren hundert Leitungen kann es erforderlich sein, nicht erst bei der letzten Leitung, sondern bereits bei der vorletzten, vorvorletzten u.s.w. das Teilungsverhältnis TV abzufragen, um eine schnellere Annäherung des Ist-Teilungsverhältnisses Ist-TV an das Soll-Teilungsverhältnis Soll-TV zu erreichen. Zweckmäßigerweise werden die für die einzelnen Leitungsbündel festzulegeden Soll-Teilungsverhältnisse Soll-TV bereits bei der Dimensionierung des Netzes errechnet und später bei der Konfiguration der Leitungsbündel in die Vermittlungseinrichtungen VE eingegeben.

Das erfindungsgemäße Verfahren ist an allen Verkehrsbeziehungen einsetzbar, die als wechselseitige Letztwege betrieben werden. Es sollte insbesondere dort verwendet werden, wo heute die Funktion "Trunk Reservation" eingegeben ist sowie bei den Leitungsbündeln, die derzeit dreigeteilt sind.

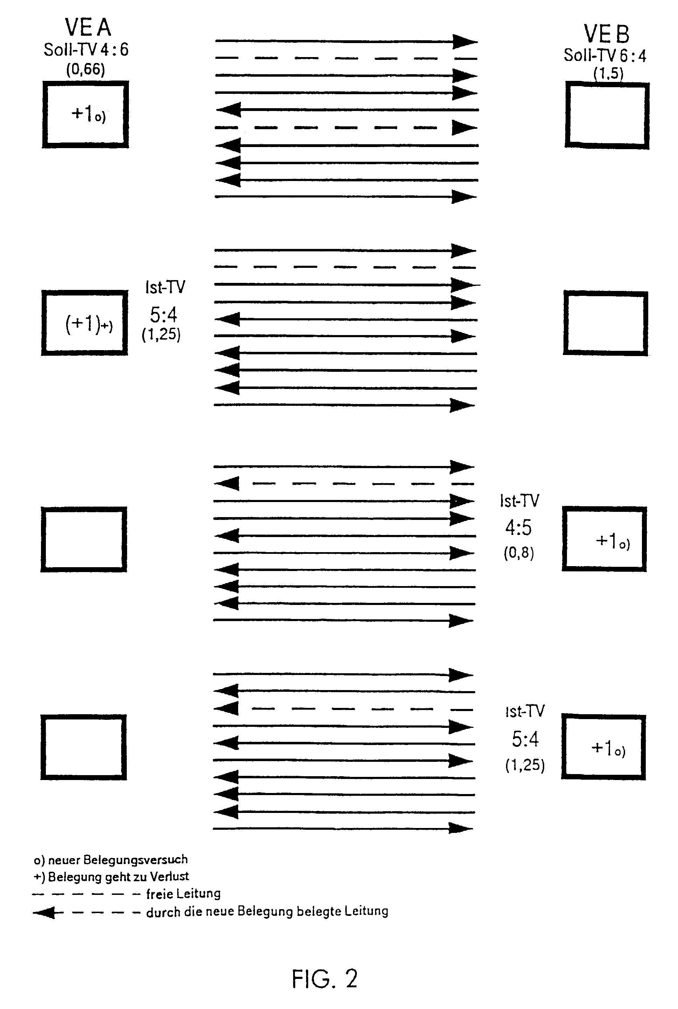

Das Beispiel nach Fig. 2 enthält für ein wechselseitiges Leitungsbündel einige Beispiele für typische Belegungsmuster.

Bei einem wechselseitig betriebenen Leitungsbündel beträgt im Normalfall das Verkehrsverhältnis 60 : 40 zu Gunsten des Verkehrs von der Vermittlungseinrichtung VE B zur Vermittlungseinrichtung VE A. Es wird angenommen, daß 10 Leitungen geschaltet sind. Die Leitungszahl wird nun im Verhältnis 60 : 40 aufgeteilt und als Soll-Teilungsverhältnis Soll-TV 6 : 4 in die Vermittlungseinrichtung VE B und als Soll-Teilungsverhältnis Soll-TV 4 : 6 in die Vermittlungseinrichtung VE A eingegeben. Das bedeutet, daß von der Vermittlungseinrichtung VE B aus betrachtet - bei einer normalen Verkehrsverteilung und voller Last - 6 Leitungen in der gehenden Richtung und 4 Leitungen in der kommenden Richtung belegt sein werden. Von der Vermittlungseinrichtung VE A aus betrachtet ist dies entsprechend umgekehrt, das heißt 4 Leitungen gehend und 6 Leitungen kommend.

Bei dem ersten Belegungsmuster ist mehr als eine Leitung frei. Bei dem Eintreffen eines Belegungsversuches (hier an der Vermittlungseinrichtung VE A) wird die Belegung durchgeschaltet, ohne daß das Ist-Teilungsverhältnis Ist-TV betrachet wird.

Bei dem zweiten Belegungsmuster ist nur noch eine Leitung frei. Trifft nun eine weitere Belegung an einer der beiden Vermittlungseinrichtungen VE A oder B ein, muß das Ist-Teilungsverhältnis Ist-TV betrachtet werden. In dem dargestellten Beispiel steht die neue Belegung an der Vermittlungseinrichtung VE A an. Das Ist-Teilungsverhältnis Ist-TV beträgt für die Vermittlungseinrichtung VE A 5 : 4 (1,25) und ist damit größer als das Soll-Teilungsverhältnis Soll-TV der Vermittlungseinrichtung VE A von 4 : 6 (0,66), das heißt die an der Vermittlungseinrichtung VE A anstehende Belegung muß daher verlustig gehen.

Das dritte Belegungsmuster ist identisch mit dem zweiten Belegungsmuster, das heißt es ist nur noch eine Leitung frei. Die neue Belegung steht jetzt allerdings an der Vermittlungseinrichtung VE B an. Dort ist das Ist-Teilungsverhältnis Ist-TV 4 : 5 (0,8) und damit kleiner als das Soll-Teilungsverhältnis Soll-TV der Vermittlungseinrichtung VE B von 6 : 4 (1,5). Die Vermittlungseinrichtung VE B belegt die letzte freie Leitung. Das neue Ist-Teilungsverhältnis Ist-TV von 5 : 5 (1,0) an der Vermittlungseinrichtung VE B nähert sich dem Soll-Teilungsverhältnis Soll-TV.

Im vierten Belegungsmuster kann die neu freigewordene Leitung nur von der Vermittlungseinrichtung VE B belegt werden, weil das Ist-Teilungsverhältnis Ist-TV der Vermittlungseinrichtung VE A mit 4 : 5 (0,8) immer noch größer als das Soll-Teilungsverhältnis Soll-TV ist. Bei der Vermittlungseinrichtung VE B dagegen ist das Ist-Teilungsverhältnis Ist-TV mit 5 : 4 (1,25) nach wie vor kleiner als das Soll-Teilungsverhältnis Soll-TV von 6 : 4 (1,5). Die Belegung wird somit durchgeschaltet. Das neue Ist-Teilungsverhältnis Ist-TV an der Vermittlungseinrichtung VE B nimmt durch die neue Belegung die Größe des Soll-Teilungsverhältnisses Soll-TV an.

## Patentansprüche

1. Verfahren zur richtungsabhängigen Belegungsverteilung bei wechselseitig betriebenen Leitungsbündeln in Sprach- und Datennetzen zwischen rechnergesteuerten Vermittlungseinrichtungen, die wechselseitig betrieben werden, wobei beide Vermittlungseinrichtungen unabhängig voneinander auf freie Leitungen des Leitungsbündels zugreifen und diese belegen können, dadurch gekennzeichnet,
daß in die Vermittlungseinrichtungen (VE A, VE B) für das sie verbindende, wechselseitige Leitungsbündel ein Teilungsverhältnis für die Aufteilung des Verkehrs in die gehende und kommende Richtung eingegeben wird,
daß das Teilungsverhältnis (TV) sich nach den Verkehrsanteilen, die im Normalfall in der gehenden und in der kommenden Richtung fließen, richtet,
daß die Belegungen und die Belegungsrichtung jeder Leitung des Leitungsbündels ständig und dynamisch von jeder der beiden Vermittlungseinrichtungen (VE A, VE B) beobachtet werden,
daß das Verhältnis zwischen gehendem und kommendem Verkehr frei schwingend bzw. dynamisch ist, solange mehr als eine Leitung des Leitungsbündels frei ist,
daß für den Fall, daß nur noch eine der Leitungen des Leitungsbündels frei ist, und daß bei einem augenblicklichen Teilungsverhältnis (Ist-TV) zwischen den gehend und den kommend belegten Leitungen, das von der einen Vermittlungseinrichtung (VE B) aus betrachtet, kleiner ist als das vorgesehene Soll-Teilungsverhältnis (Soll-TV), die an der Vermittlungseinrichtung (VE B) anstehende, neue Belegung durchgeschaltet wird, wobei gleichzeitig das Ist-Teilungsverhältnis (Ist-TV) in Richtung zum Soll-Teilungsverhältnis (Soll-TV) korrigiert wird.

2. Verfahren nach Patentanspruch 1, dadurch gekennzeichnet,
daß die Synchronisation der beiden Vermittlungseinrichtungen (VE A, VE B) automatisch über das Beobachten der belegten Leitungen von beiden Vermittlungseinrichtungen (VE A, VE B) erfolgt.

3. Verfahren nach einem der Patentansprüche 1 oder 2, dadurch gekennzeichnet,
daß bei großen oder sehr großen Leitungsbündeln mit mehreren hundert Leitungen bereits bei der vorletzten, vorvorletzten u.s.w. freien Leitung das Teilungsverhältnis abgefragt wird, wodurch eine schnelle Annäherung des Ist-Teilungsverhältnisses (Ist-TV) an das Soll-Teilungsverhältnis (Soll-TV) erreicht wird.

4. Verfahren nach einem der Patentansprüche 1 bis 3, dadurch gekennzeichnet,
daß die für die einzelnen Leitungsbündel festzulegenden Soll-Teilungsverhältnisse (Soll-TV) bereits bei der Dimensionierung des Netzes errechnet und später bei der Konfiguration der Leitungsbündel in die Vermittlungseinrichtungen (VE A, VE B) eingegeben werden.

5. Verfahren nach einem oder mehreren der Patentansprüche 1 bis 4, dadurch gekennzeichnet,
daß es in allen Verkehrsbeziehungen einsetzbar ist, die als wechselseitige Letztwege betrieben werden.

## Claims

1. Process for direction-dependent line-seizure distribution in two-way line groups in voice and data networks between two-way computer-controlled switching systems, both switching systems being able independently of each other to access and seize idle lines of the line group, characterized in that
a division ratio for division of the traffic into the outgoing and incoming directions is entered in the switching systems (switching system A, switching system B) for the two-way line group connecting said switching systems;
the division ratio is based on the traffic components normally flowing in the outgoing and incoming directions;
the seizures and seizure direction of each line of the line group are constantly and dynamically observed by each of the two switching systems (switching system A, switching system B);
the ratio between outgoing and incoming traffic is freely oscillating or dynamic as long as more than one line of the line group is idle;
in the event that only one of the lines of the line group is still idle and in the case of an instantaneous division ratio (actual division ratio) between the outgoing and incoming seized lines which is, as observed from one switching system (switching system B), less than the planned setpoint division ratio, the new call waiting at the switching system (switching system B) is connected through, the actual division ratio simultaneously being corrected in the direction of the setpoint division ratio.

2. Process according to claim 1, characterized in that
the synchronization of the two switching systems (switching system A, switching system B) is accomplished automatically through the observation of the seized lines from both switching systems (switching system A, switching system B).

3. Process according to any one of claims 1 or 2, characterized in that
in the case of large or very large line groups with several hundred lines, the division ratio is checked already at the penultimate, prepenultimate etc. idle line, this providing a fast approximation of the actual division ratio to the setpoint division ratio.

4. Process according to any one of claims 1 to 3, characterized in that
the setpoint division ratios required for the individual line groups are calculated already during the dimensioning of the network and are later entered in the switching systems (switching system A, switching system B) during configuration of the line groups.

5. Process according to any one or more of claims 1 to 4, characterized in that
said process can be used in all traffic relationships which are operated as two-way last-choice routes.

## Revendications

1. Procédé de répartition de l'occupation en fonction de la direction pour les faisceaux exploités en bidirectionnel dans les réseaux vocaux et de données entre commutateurs appuyés sur ordinateur exploités en bidirectionnel, les deux commutateurs accédant indépendamment l'un de l'autre aux circuits libres du faisceau et pouvant les occuper,
caractérisé en ce que
un rapport de répartition du trafic en direction sortante et entrante est introduit dans les commutateurs (commutateur A, commutateur B) pour le faisceau de circuits bidirectionnel les reliant,
le rapport de répartition se réfère aux parts de trafic acheminées en temps normal dans les directions sortante et entrante,
les occupations et la direction d'occupation de chaque circuit du faisceau sont observées en permanence et de manière dynamique par chacun des deux commutateurs (commutateur A, commutateur B),
le rapport entre le trafic sortant et le trafic entrant varie librement et est donc dynamique tant que plus d'un circuit du faisceau est libre,
au cas où un seul des circuits du faisceau reste libre et où le rapport de répartition du moment (rapport réel) entre les circuits occupés à la sortie et à l'entrée est inférieur, vu de l'un des commutateurs (commutateur B), au rapport de répartition théorique prévu, la nouvelle occupation à laquelle il doit être procédé au commutateur (commutateur B) est effectuée, le rapport de répartition réel étant en même temps corrigé de façon à ce qu'il se rapproche du rapport de répartition théorique

2. Procédé selon la revendication 1, caractérisé en ce que
la synchronisation des deux commutateurs (commutateur A, commutateur B) se fait automatiquement par l'observation des circuits occupés des deux commutateurs (commutateur A, commutateur B)

3. Procédé selon l'une des revendications 1 ou 2, caractérisé en ce que
pour les faisceaux volumineux ou très volumineux comprenant plusieurs centaines de circuits, le rapport de répartition soit consulté dès l'avant-dernier, avant-avant-dernier, etc. circuit libre, ce qui permet de rapprocher rapidement le rapport de répartition réel du rapport de répartition théorique.

4. Procédé selon l'une des revendications 1 à 3, caractérisé en ce que
les rapports de répartition théoriques à fixer pour les différents faisceaux sont calculés dès le dimensionnement du réseau et introduits plus tard, lors de la configuration des faisceaux, dans les commutateurs (commutateur A, commutateur B)

5. Procédé selon l'une ou plusieurs des revendications 1 à 4, caractérisé en ce que
il est utilisable dans toutes les relations de trafic exploitées comme dernières voies d'acheminement bidirectionnelles.
